# EUROPÄISCHE PATENTSCHRIFT

(11) **EP 3 938 713 B1**
(45) Veröffentlichungstag und Bekanntmachung des Hinweises auf die Patenterteilung: **29.05.2024**
(21) Anmeldenummer: 20720501.4
(22) Anmeldetag: 10.03.2020
(51) Int. Cl.: F24D 3/16, F24D 3/12, E04B 9/00, F24F 5/00, E04B 9/04

(54) **MODULARES SYSTEM, STRAHLPLATTENMODUL UND VERFAHREN**
MODULAR SYSTEM, RADIANT PANEL MODULE AND METHOD
SYSTÈME MODULAIRE, MODULE DE PANNEAU RAYONNANT ET PROCÉDÉ

(30) Priorität: 11.03.2019 CH 2922019
(43) Veröffentlichungstag der Anmeldung: 19.01.2022
(73) Patentinhaber: Zehnder Group International AG, 5722 Gränichen (CH)
(72) Erfinder: WESCHLE, Hans-Peter, 77743 Neuried (DE); HOLZWARTH, Jörg, 77974 Meißenheim/Kürzell (DE); IBEN, Markus, 77963 Schwanau (DE)
(74) Vertreter: Rentsch Partner AG
(86) Internationale Anmeldenummer: PCT/IB2020/052051
(87) Internationale Veröffentlichungsnummer: WO 2020/183358

(56) Entgegenhaltungen:
- EP-A1- 0 961 084
- EP-A2- 0 406 476
- EP-A2- 0 733 865
- DE-U1- 9 316 791
- GB-A- 2 262 548

## Beschreibung

Die Erfindung betrifft ein modulares System zum Aufbau einer hinsichtlich ihrer Flächenerstreckung variablen Strahlplatte, insbesondere Heizstrahlplatte oder Kühlstrahlplatte. Ferner betrifft die Erfindung ein Strahlplattenmodul zur Verwendung in dem erfindungsgemäßen System und ein Verfahren zum Aufbau einer hinsichtlich ihrer Flächenerstreckung variablen Strahlplatte aus dem erfindungsgemäßen modularen System.

Strahlplatten sind aus dem Stand der Technik an sich bekannt. Sie dienen insbesondere in der Ausgestaltung als Deckenstrahlplatte einer Deckenstrahlheizung und/oder Deckenstrahlkühlung zum Temperieren eines Raums mittels emittierter und/oder absorbierter Wärmestrahlung. Hierzu wird die Strahlplatte beispielsweise mittels eines in einem Rohrregister geführten Heizmediums erhitzt. Alternativ kann die Strahlplatte auch elektrisch erhitzt werden.

Deckenstrahlplatten sind im Stand der Technik in Standardmaßen hinsichtlich Länge und Breite erhältlich. In der Regel werden Strahlplatten einstückig aus einem Metallrohling in die gewünschte Form gepresst. Dabei sind Breite und Länge der fertigen Strahlplatte einerseits durch die Maße des Plattenrohlings und andererseits durch die Maße des Pressstempels nach oben hin limitiert. In der Praxis sind Strahlplatten daher produktionsbedingt mit stets der gleichen Länge und in einer bestimmten Anzahl von Breiten herstellbar.

Es ist daher im Stand der Technik nicht möglich, eine Fläche beispielsweise einer Decke mit Deckenstrahlplatten vollständig abzudecken, die hinsichtlich ihrer Breite nicht den Standardmaßen der Strahlplatte entspricht. Zur Lösung werden derzeit mehrere voneinander beabstandete Reihen von in Längsrichtung hintereinander angeordneter Strahlplatten nebeneinander an der Decke angebracht. Dies hat jedoch eine vergleichsweise schlechte Heizleistung zur Folge, da nur ein Teil der Deckenfläche strahlungstechnisch abgedeckt ist. Es verbleiben Lücken, die auch in ästhetischer Hinsicht nicht wünschenswert sind, da sie ein homogenes Flächendesign verhindern. Eine Deckenstrahlplatten-Heizung aus einem Plattenelement bestimmter Baubreite mit vorgegebener Anzahl Aufnahmenuten für jeweils ein Rohr ist in der EP 0 961 084 offenbart. Weiterer Stand der Technik wird in der EP 0 406 476 A2, GB 2 262 548 A, EP 0 733 865 A2 und DE 93 16 791 U1 offenbart.

Ersichtlicherweise ist es auch aus wirtschaftlichen Gründen nicht möglich für jede erdenkliche Deckenfläche eine genau passende Strahlplatte vorzuhalten.

Es ist daher die **Aufgabe** der Erfindung, die Heizleistung oder Kühlleistung von Strahlungs-Heizvorrichtungen bzw. Strahlungs-Kühlvorrichtungen, insbesondere Deckenstrahlheizungen bzw. Deckenstrahlkühlungen, durch eine optimierte Flächennutzung zu verbessern.

Zur **Lösung** der Aufgabe schlägt die Erfindung ein modulares System zum Aufbau einer hinsichtlich ihrer Flächenerstreckung variablen Strahlplatte, insbesondere Deckenstrahlplatte, gemäss Anspruch 1 vor. Das System weist eine Mehrzahl von Strahlplattenmodulen auf, aus welchen die Strahlplatte zusammensetzbar ist, wobei jedes Strahlplattenmodul eine Strahlfläche und zwei auf gegenüberliegenden Seiten der Strahlfläche angeordnete und in Längsrichtung des Strahlplattenmoduls verlaufende Seitenwände aufweist, wobei die Strahlplattenmodule über ihre jeweiligen Seitenwände miteinander, insbesondere lösbar, verbindbar sind.

Die Erfindung stellt in vollkommener Abkehr zum Stand der Technik nicht darauf ab, eine Vielzahl von standardisierten Strahlplatten aneinanderzureihen. Stattdessen kann eine einzige homogene Strahlplatte in gewünschter Größe mittels des erfindungsgemäßen Systems modular zusammengesetzt werden. Dies hat den Vorteil, dass eine lückenlose Strahlfläche bereitgestellt wird, die sowohl hinsichtlich der Heizleistung als auch hinsichtlich des optischen Erscheinungsbildes verbessert ist. Die Verbindung der Strahlplattenmodule erfolgt erfindungsgemäß in Breitenrichtung des Moduls über miteinander korrespondierende Seitenränder der Module. Hierdurch kann die resultierende Strahlplatte hinsichtlich ihrer Breitenerstreckung beliebig ausgebaut werden. Die einzelnen Module können dabei standardisierte Abmessungen aufweisen, wodurch der Produktionsaufwand erheblich vereinfacht ist. Ferner können bestehende Produktionseinrichtungen weiter genutzt werden. Unabhängig von den Abmessungen der Strahlplattenmodule lässt sich der erfindungsgemäße Vorteil erzielen. Sind die Strahlplattenmodule vergleichsweise groß, ist der Fertigungsaufwand vereinfacht, da weniger Module zum Aufbau einer Strahlfläche in gewünschter Größe miteinander verbunden werden müssen. Sind die Strahlplattenmodule vergleichsweise klein, kann eine Strahlfläche aufgebaut werden, die die maximal verfügbare Fläche besser ausnutzt, wodurch sich im Ergebnis eine weiter verbesserte Heizleistung ergibt. Es ist in dieser Hinsicht bevorzugt, dass die Strahlplattenmodule mit unterschiedlichen Breiten, vorzugsweise mit zwei unterschiedlichen Breiten, ausgebildet sind. Hierdurch lässt sich ein besonders vorteilhafter Kompromiss aus Fertigungsaufwand und Flächennutzung erreichen.

Auch hinsichtlich der Längserstreckung der Platten ist ein modularer Aufbau vorgesehen. Dies lässt sich einerseits wie im Falle der Seitenwände vorzugsweise dadurch erreichen, dass die Stirnseiten der Strahlplattenmodule in Längsrichtung unmittelbar miteinander verbunden werden. Gemäß einer alternativen bevorzugten Ausgestaltung der Erfindung ist es jedoch zunächst vorgesehen, dass alle Strahlplattenmodule die gleiche Länge aufweisen. Die Strahlplattenmodule können in diesem Fall in Längsrichtung mittelbar miteinander verbunden werden. Dies geschieht vorzugsweise mittels Kuppelelementen, insbesondere Kuppelblechen. Ein Kuppelelement verbindet bestimmungsgemäß die einander zugewandten Stirnseiten zweier benachbarter Strahlplattenmodule.

Erfindungsgemäß sind die Strahlplattenmodule über ihre Seitenwände miteinander verbindbar. Lösbare und unlösbare Verbindungen sind dabei möglich. "Unlösbare Verbindungen" meint dabei solche Verbindungen, bei denen zwei Module nach der Verbindung nicht wieder beschädigungslos voneinander gelöst werden können. Hierzu zählen insbesondere Schweißverbindungen. Der Vorteil dieser Art der Verbindung liegt in der besseren mechanischen Stabilität der Verbindung und der besseren Wärmeleitung zwischen den Modulen. "Lösbare Verbindung" meint hingegen solche Verbindungen, bei denen die Module nach deren Verbindung wieder beschädigungsfrei gelöst werden können. Hierzu zählen insbesondere Rast- oder Schraubverbindungen. Dies hat den Vorteil, dass die Module wiederverwendbar sind. Ferner können menschliche Fehler beim Aufbau der Strahlplatte wieder rückgängig gemacht werden. Vorzugsweise stellen die Seitenwände Rastmittel bereit, die zur Herstellung der Rastverbindung miteinander wechselwirken können. Alternativ können gesonderte Rastelemente, insbesondere in Form einer Rastleiste vorgesehen sein, die in die an den Seitenwänden ausgebildeten Rastmittel, insbesondere in Form von Vorsprüngen oder Ausnehmungen, zur Herstellung der Rastverbindung eingreift.

Gemäß einer bevorzugten Ausgestaltung der Erfindung unterscheiden sich die beiden Seitenwände jedes Strahlplattenmoduls hinsichtlich ihrer Querschnittslänge ausgehend von der Strahlfläche voneinander. Die kurze Seitenwand dient dabei ausschließlich der Verbindung mit einem anderen Strahlplattenmodul. Sie ist bei einer bestimmungsgemäß aufgebauten Strahlplatte stets innenliegend und damit kein Teil der Strahlfläche. Die lange Seitenwand kann demgegenüber einerseits der Verbindung mit anderen Strahlplattenmodulen beim Aufbau der Strahlplatte dienen. Andererseits kann sie aber auch die seitliche Außenwand der fertigen Strahlplatte bilden, wobei sie das Innere des späteren Strahlheizkörpers verschließt und andererseits eine vergleichsweise große seitliche Strahlfläche bereitstellt. Ferner dient sie der Befestigung von mechanischen Verstärkungselementen. Durch die bevorzugte Ausgestaltung unterschiedlich langer Seitenwände wird in vorteilhafter Weise Material eingespart. Ferner ist jedes Strahlplattenmodul dadurch geeignet, an jeder beliebigen Position der aufzubauenden Strahlplatte eingebaut zu werden, da jedes Modul eine lange und eine kurze Seitenwand aufweist. Es ist dabei aus mechanischen Gründen der mechanischen Stabilität vorgesehen, dass nur Seitenwände gleicher Länge miteinander verbindbar sind.

Erfindungsgemäß kann die Strahlplatte mittels eines flüssigen Heizmediums, insbesondere Wasser, oder elektrisch erhitzt werden. Insbesondere bei vergleichsweise großen Flächen ist jedoch aus Gründen des Energieverbrauchs die Erhitzung mittels eines Heizmediums bevorzugt. Es ist in diesem Fall vorgesehen, dass die Strahlplattenmodule Rohraufnahmen für die Aufnahme jeweils eines Rohrs zur Führung des Heizmediums aufweisen. Die Rohraufnahmen sind dabei als Nuten ausgebildet. Die Nut weist vorzugsweise eine zu der Querschnittsgeometrie des Rohrs korrespondierende Querschnittsgeometrie auf. Die Nuten erstrecken sich dabei im Querschnitt vorzugsweise ausgehend von der Strahlfläche in entgegengesetzter Richtung der Seitenwände. Das Rohr kann dabei ein einzelnes Rohr oder Teil eines Rohrregisters sein. Die Rohraufnahmen verlaufen in Längsrichtung der Strahlplattenmodule. Sie verlaufen damit parallel zu den Seitenwänden. Vorzugsweise haben benachbarte Rohraufnahmen stets den gleichen Abstand zu einander. Hierdurch ist eine homogene Wärmeübertragung auf die Strahlfläche erreicht. Es ist prinzipiell möglich, vergleichsweise schmale Strahlplattenmodule auszubilden, die lediglich über eine in Längsrichtung verlaufende Rohraufnahme verfügt. Hierdurch lässt sich die raumseitig zu bedeckende Fläche in der Breite (in rechtem Winkel zur Längsrichtung des Strahlplattenmoduls und zur Längserstreckung der Rohraufnahmen) am besten ausnutzen, wodurch die Strahlungsleistung der resultierenden Strahlplatte optimiert ist. Dies ist insbesondere für eine vergleichsweise kleine zur Verfügung stehende Fläche von Vorteil. Nachteilig ist jedoch hierbei der Montage- und Materialaufwand. Es ist daher bei der Ausbildung vergleichsweise großer Strahlplatten von Vorteil, Strahlplattenmodule auszubilden, die wenigstens zwei zueinander parallel verlaufende Rohraufnahmen aufweisen. Besonders bevorzugt werden in dem erfindungsgemäßen System nur Strahlplattenmodule verwendet, die entweder zwei Rohraufnahmen (2er-Modul) oder drei Rohraufnahmen (3er-Modul) aufweisen. Durch die kombinatorische Verbindung derart ausgestalteter Strahlplattenmodule über Ihre jeweiligen Seitenwände können Strahlplatten mit im Querschnitt insgesamt wenigstens vier Rohraufnahmen ausgebildet werden. Es ist durch entsprechende Kombination möglich, der Mindestanzahl der Rohraufnahmen von vier jeweils eine weitere Rohraufnahme im Querschnitt hinzuzufügen. Dies illustrieren folgende Beispiele. Eine Kombination aus zwei 2er-Modulen ergibt insgesamt im Querschnitt vier Rohraufnahmen. Eine Kombination aus einem 2er-Modul und einem 3er-Modul ergibt insgesamt im Querschnitt fünf Rohraufnahmen. Eine Kombination aus zwei 3er-Modulen ergibt insgesamt im Querschnitt sechs Rohraufnahmen. Eine Kombination aus zwei 2er-Modulen und einem 3er-Modul ergibt insgesamt im Querschnitt 7 Rohraufnahmen. Eine Kombination aus zwei 3er-Modulen und einem 2er-Modul (oder aus vier 2er-Modulen) ergibt insgesamt im Querschnitt acht Rohraufnahmen. Die Reihe lässt sich durch entsprechende Kombination der Strahlplattenmodule beliebig verlängern. Die Anzahl der Rohraufnahmen ist aufgrund der äquidistanten Abstände stets auch eine Angabe für die Breite der resultierenden Strahlplatte. Auf diese Weise lässt sich eine Strahlplatte mit einer Anzahl von Rohraufnahmen aufbauen, die mit aus dem Stand der Technik bekannten Mitteln nicht möglich ist.

Es ist in diesem Zusammenhang bevorzugt vorgesehen, dass die Kupplungselemente ebenfalls Rohraufnahmen aufweisen, die in ihrer Positionierung mit denen der Strahlplattenmodule korrespondieren. Auch die Kupplungselemente können bevorzugt nach dem Vorbild der Strahlplattenmodule mit Bezug auf ihre Breite modular aufgebaut sein.

Es ist für die Herstellung der erfindungsgemäßen Strahlplattenmodule vorgesehen, bestehende Produktionseinrichtungen zu benutzen. Insofern ist es bevorzugt, ein Strahlplattenmodul aus einem plattenförmigen Metallrohling, vorzugsweise einem Stahlblech, mittels Pressen herzustellen. Die Seitenwände sind dabei dadurch gebildet, dass der Metallrohling in seinen einander gegenüberliegenden Randbereichen gegenüber der Strahlfläche in einem Winkel, vorzugsweise in einem rechten Winkel, umgebogen ist. In dem Fall, in dem die Seitenwände mit unterschiedlicher Querschnittslänge ausgebildet sind, sind diese dadurch gebildet, dass diese mit unterschiedlich breiten Pressstempeln umgebogen sind. Es ist gemäß dieser Ausgestaltung bevorzugt, dass die Rohraufnahmen, insbesondere in Form von Nuten mit halbkreisförmigem Querschnitt in den Metallrohling gepresst werden. Die Strahlplattenmodule sind damit vorzugsweise einstückig ausgebildet.

Gemäß der Erfindung ist eine in wenigstens einer Raumrichtung biegesteife Verstärkungsleiste vorgesehen, die der mechanischen Stabilisierung der resultierenden Strahlplatte dient. Es hat sich gezeigt, dass vergleichsweise breite Strahlplatten, insbesondere in Verwendung als Deckenstrahlplatte dazu neigen, sich aufgrund ihres Eigengewichts in Richtung der Schwerkraft zu wölben. Hierdurch kann die Wärmeübertragung zwischen Rohr und Strahlplatte unterbrochen werden. Die Verstärkungsleiste wirkt dem in vorteilhafter Weise entgegen. Es dazu vorgesehen, dass die Verstärkungsleiste beim Aufbau der Strahlplatte an den Strahlplattenmodulen zu befestigen. Dabei wird die Verstärkungsleiste erfindungsgemäß zwischen zwei einander gegenüberliegenden langen Seitenwänden angeordnet und an diesen befestigt. Die Befestigung erfolgt erfindungsgemäß formschlüssig, wobei sowohl die Seitenwände als auch die Verstärkungsleiste entsprechende, miteinander korrespondierende Befestigungsmittel aufweisen.

Die Verstärkungsleiste weist mindestens eine Ausnehmung auf, in welche im befestigten Zustand jeweils ein kurzes Seitenwand-Paar zweier benachbarter Strahlplattenmodule hineinragt, wobei zwischen der Ausnehmung und dem kurzen Seitenwand-Paar ein Formschluss gebildet ist. (-> Überbauachse oder Durchsteckachse oder Stirnachse)

Erfindungsgemäß enthält ein langes Seitenwand-Paar zweier benachbarter Strahlplattenmodule ein Durchsteckloch, durch welches die Verstärkungsleiste im befestigten Zustand **hindurch** ragt, wobei zwischen der Ausnehmung und dem langen Seitenwand-Paar ein Formschluss gebildet ist. (→ Durchsteckachse)

Vorzugsweise enthält diese Verstärkungsleiste mindestens einen Befestigungsabschnitt, mit welchem die Verstärkungsleiste an dem langen Seitenwand-Paar befestigbar ist, und mindestens einen Befestigungsabschnitt, mit welchem die Verstärkungsleiste an einer langen Seitenwand befestigbar ist.

Vorzugsweise enthält diese Verstärkungsleiste mindestens einen Befestigungsabschnitt, mit welchem die Verstärkungsleiste an dem langen Seitenwand-Paar befestigbar ist, und mindestens einen Befestigungsabschnitt, mit welchem die Verstärkungsleiste an einer kurzen Seitenwand bzw. einem kurzen Seitenwand-Paar befestigbar ist.

Erfindungsgemäß weist die Verstärkungsleiste mindestens eine Ausnehmung auf, in welche im befestigten Zustand jeweils ein kurzes Seitenwand-Paar zweier benachbarter Strahlplattenmodule hineinragt, wobei zwischen der Ausnehmung und dem kurzen Seitenwand-Paar ein Formschluss gebildet ist. (→ Stirnachse)

Vorzugsweise enthält ein umgebogener Abschnitt der Seitenwände ein Loch, und die Verstärkungsleiste enthält mindestens eine Nase, welche im befestigten Zustand durch ein Loch an einem umgebogenen Abschnitt eines langen Seitenwand-Paars **hindurch** ragt, und enthält mindestens eine Nase, welche im befestigten Zustand durch ein Loch an einem umgebogenen Abschnitt einer langen Seitenwand **hindurch** ragt.

Vorzugsweise hat das System hochgebogene Rohrabschnitte der Rohre im Bereich der jeweiligen Stirnseiten der Strahlplattenmodule, wobei die Rohrenden benachbarter Strahlplattenmodule mittels eines Rohrverbindungselements miteinander fluiddicht verbunden sind.

Die Erfindung betrifft ferner ein Strahlplattenmodul zur Verwendung in einem erfindungsgemäßen System aufweisend eine Strahlfläche und zwei auf gegenüberliegenden Seiten der Strahlfläche angeordnete und in Längsrichtung verlaufende Seitenwände, wobei die Seitenwände wenigstens ein Befestigungsmittel aufweisen, welches der Verbindung mit der Seitenwand eines anderen Strahlplattenmoduls dient. Das Befestigungsmittel kann im Falle einer Verschweißung oder einer Adhäsion als einfache Anlagefläche ausgebildet sein. Im Falle einer Verschraubung oder Verrastung sind die Befestigungsmittel insbesondere als Vorsprünge, Ausnehmungen, Schraublöcher, Nuten oder dergleichen ausgebildet.

Vorzugsweise hat das Strahlplattenmodul hochgebogene Rohrabschnitte der Rohre im Bereich der jeweiligen Stirnseiten des Strahlplattenmoduls. Dadurch können benachbarte Strahlplattenmodule bei der Erstellung der Strahlplatte mit ihren Stirnseiten bündig aneinandergesetzt werden. Die Erfindung betrifft ferner ein Verfahren zum Aufbau einer hinsichtlich ihrer Flächenerstreckung variablen Strahlplatte aus einem modularen System gemäß der Erfindung, bei dem wenigstens zwei Strahlplattenmodule an ihren einander zugewandten in Längsrichtung verlaufenden Seitenwänden miteinander verbunden werden.

Es ist dabei bevorzugt vorgesehen, dass die Strahlplattenmodule Seitenwände mit im Querschnitt unterschiedlicher Länge aufweisen, wobei nur die Seitenwände mit gleicher Länge miteinander verbunden werden.

Vorzugsweise hat das Strahlplattenmodul hochgebogene Rohrabschnitte der Rohre im Bereich der jeweiligen Stirnseiten des Strahlplattenmoduls. Benachbarte Strahlplattenmodule werden bei der Erstellung der Strahlplatte mit ihren Stirnseiten bündig aneinandergesetzt, und die Rohrenden der benachbarten Strahlplattenmodule werden mittels eines Rohrverbindungselements oberhalb der Strahlplatte miteinander verbunden.

Alle erfindungsgemäßen und bevorzugten Merkmale der Erfindung haben damit für sich genommen und in Kombination miteinander den synergetischen Effekt, die Heizleistung von Strahlungs-Heizvorrichtungen oder die Kühlleistung von Strahlungs-Kühlvorrichtungen, insbesondere Deckenstrahlheizungen oder Deckenstrahlkühlungen, durch eine optimierte Flächennutzung zu verbessern.

Die Erfindung wird nachfolgend anhand von Ausführungsbeispielen erläutert. Wobei die Abbildungen der ersten Ausführung ein nicht erfindungsgemäßes Beispiel zeigen.

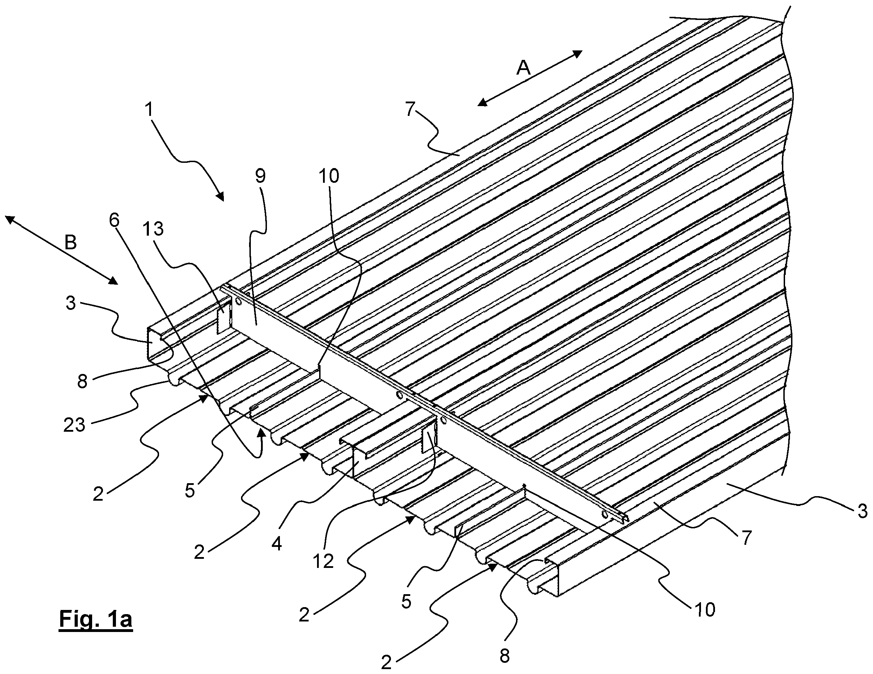

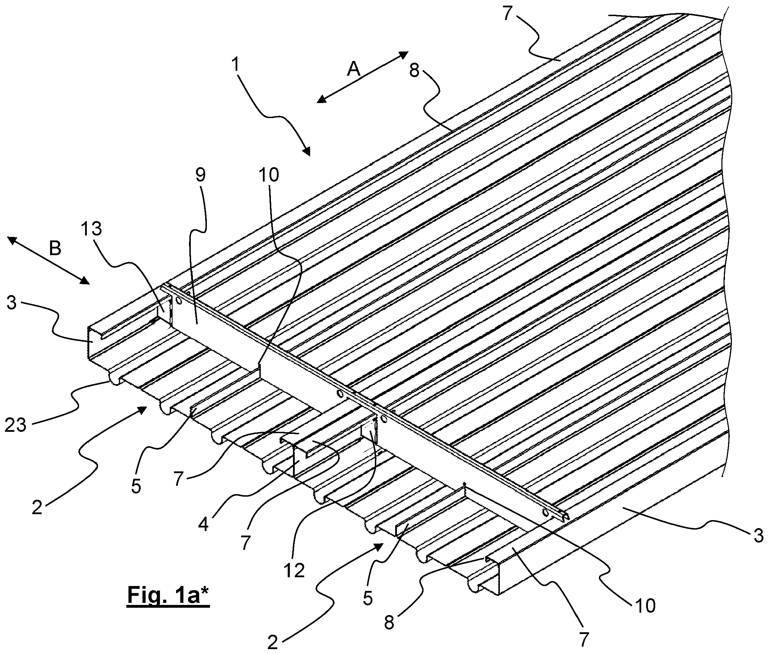

- Fig. 1a: eine erste Ausführung einer zusammengesetzten Deckenstrahlplatte in einem ersten Zustand in perspektivischer Ansicht;

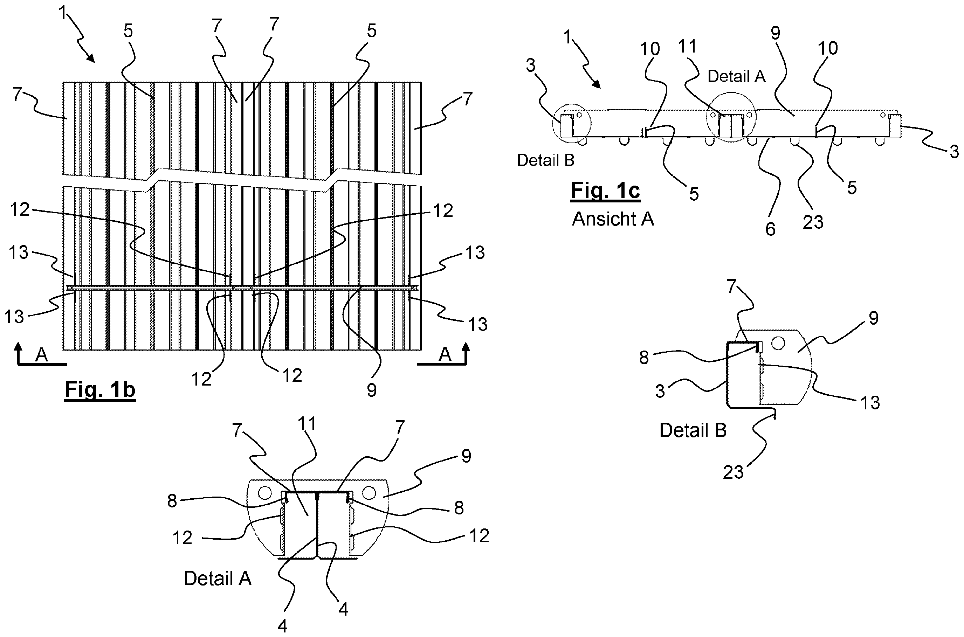

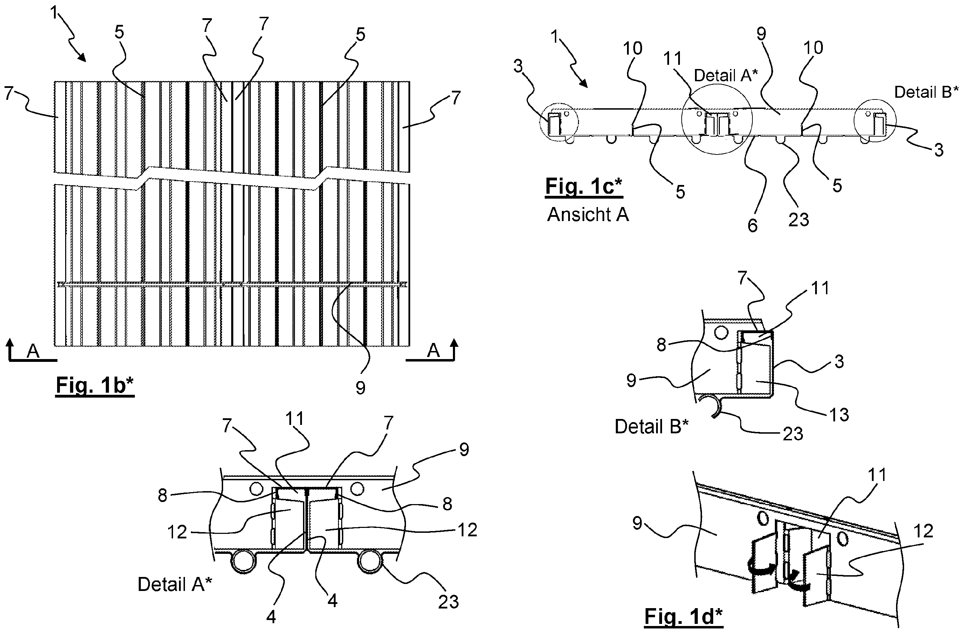

- Fig. 1b: die erste Ausführung in einer Draufsicht;
- Fig. 1c: die erste Ausführung in der Blickrichtung der Pfeile A in Fig. 1b sowie jeweils eine vergrösserte Ansicht eines ersten Details A und zweiten Details B des ersten Zustands;
- Fig. 1a*: die erste Ausführung einer zusammengesetzten Deckenstrahlplatte in einem zweiten Zustand in perspektivischer Ansicht;
- Fig. 1b*: die erste Ausführung in einer Draufsicht;
- Fig. 1c*: die erste Ausführung in der Blickrichtung der Pfeile A in Fig. 1b* sowie jeweils eine vergrösserte Ansicht eines ersten Details A* und zweiten Details B* des zweiten Zustands;
- Fig. 1d*: eine Perspektivansicht des Details A* des zweiten Zustands.
- Fig. 2a: eine zweite Ausführung einer nach dem erfindungsgemäßen System zusammengesetzten Deckenstrahlplatte in perspektivischer Ansicht;
- Fig. 2b: die zweite Ausführung in einer Draufsicht;
- Fig. 2c: die zweite Ausführung in der Blickrichtung der Pfeile A in Fig. 2b sowie jeweils eine vergrösserte Ansicht eines ersten Details A und eines zweiten Details B;
- Fig. 3: eine dritte Ausführung einer nach dem erfindungsgemäßen System zusammengesetzten Deckenstrahlplatte in einer Draufsicht und in der Blickrichtung der Pfeile A;
- Fig. 4: eine vierte Ausführung einer nach dem erfindungsgemäßen System zusammengesetzten Deckenstrahlplatte in einer Seitenansicht; und
- Fig. 5: weitere nach dem erfindungsgemäßen System aufgebaute Deckenstrahlplatten in schematischer Ansicht im Querschnitt.
In **Fig. 1a****,** **Fig. 1b und Fig. 1c** bzw. in **Fig. 1a*****,** **Fig. 1b*****,** **Fig. 1c***** und** **Fig. 1d*** ist eine erste Ausführung einer zusammengesetzten Deckenstrahlplatte 1 in einem ersten Zustand bzw. in einem zweiten Zustand gezeigt.

Die Deckenstrahlplatte 1 ist im vorliegenden Beispiel aus vier Strahlplattenmodulen 2 zusammengesetzt. Die Strahlplattenmodule 2 weisen je zwei Rohraufnahmen 23 auf. Es handelt sich mithin um 2er-Module. Die Rohraufnahmen 23 sind als in Längsrichtung A verlaufende Nuten mit halbkreisförmigem Querschnitt ausgebildet. Die Rohraufnahmen 23 verlaufen parallel zueinander. Dabei sind alle Strahlplattenmodule 2 so ausgebildet, dass die Abstände zwischen Rohraufnahmen 23 jedes Strahlplattenmoduls 2 äquidistant sind.

Jedes Strahlplattenmodul 2 weist dabei im vorliegenden Beispiel eine lange Seitenwand 3,4 und eine kurze Seitenwand 5 auf. Die langen Seitenwände 3 bilden dabei die seitliche Außenwand der Deckenstrahlplatte 1. Demgegenüber sind die langen Seitenwände 4 innenliegend angeordnet. Die innenliegenden Seitenwände 4 dienen dabei der zusätzlichen mechanischen Stabilisierung der Deckenstrahlplatte 1.

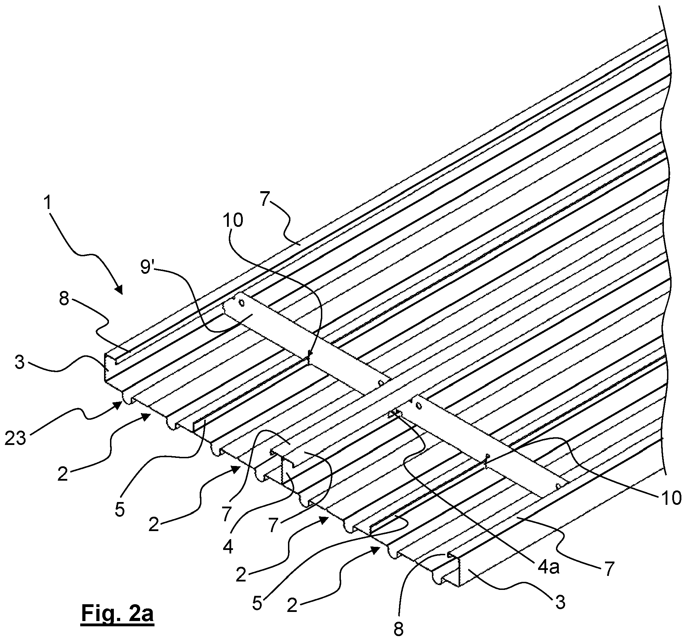

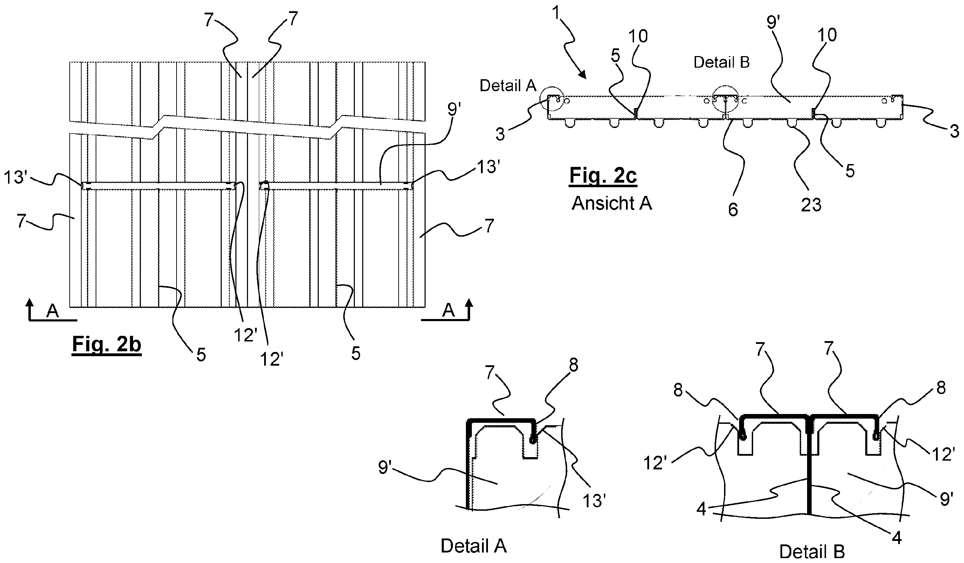

Die kurzen Seitenwände 5 dienen ausschließlich der Verbindung zweier benachbarter 2er-Module 2 und sind alle innenliegend angeordnet. Die Angabe "lang" und "kurz" bezieht sich in diesem Zusammenhang auf die Länge derjenigen Teile der Seitenwände 3,4,5 welche sich im rechten Winkel zu der Strahlfläche 6 der Deckenstrahlplatte 1 erstrecken. In Figur 2 ist diese Erstreckungsrichtung als Richtung C abgebildet.

Die Strahlplattenmodule 2 sind vorliegend aus Stahlblechrohlingen mittels Pressens einstückig hergestellt. Die Seitenwände 3,4,5 sind dabei gegenüber den jeweils angrenzenden Abschnitten der Strahlflächen 6 um 90°umgebogen.

Als weiteres Verstärkungselement weisen die langen Seitenwände 3,4 endseitig jeweils zwei weitere Abschnitte 7,8 auf, welche jeweils um weitere 90° umgebogen sind. Hierdurch sind die Strahlplattenmodule 2 und die Deckenstrahlplatte 1 in vorteilhafter Wiese versteift ausgebildet.

In **Fig. 1a****,** **Fig. 1b und Fig. 1c** ist insbesondere eine Verstärkungsleiste 9 abgebildet. Sie wird auch als **"Überbau-Leiste" oder "Überbau-Achse"** bezeichnet. Sie erfüllt vorliegend eine Doppelfunktion. Einerseits dient sie der mechanischen Stabilisierung der Deckenstrahlplatte 1 in Breitenrichtung B. Andererseits verbindet sie die jeweiligen einander zugewandten Seitenwände 4,5 der Strahlplattenmodule 2 miteinander. Zur Verbindung der kurzen Seitenwände 5 stellt sie Schlitze 10 bereit, welche die freien Enden der kurzen Seitenwände 5 miteinander verklemmen. Zur Verbindung der langen Seitenwände 4 stellt die Verstärkungsleiste 9 eine Ausnehmung 11 bereit, in welcher die Seitenwände 4 aufgenommen sind. Zur weiteren Befestigung der Verstärkungsleiste 9 an den langen Seitenwänden 3,4 sowie zur Verklemmung der innenliegenden Seitenwände 4 miteinander weist die Verstärkungsleiste 9 plattenförmige Befestigungsabschnitte 12,13 auf, welche mit den umgebogenen Abschnitten 7,8 zur Herstellung einer lösbaren Verbindung wechselwirken. Die plattenförmigen Befestigungsabschnitte 12,13 sind umgebogene Endbereiche der Verstärkungsleiste 9. Die Befestigungsabschnitte 12,13 befinden sich dabei in einem ersten Zustand.

In der Draufsicht der **Fig. 1b** erkennt man die Befestigungsabschnitte 12,13, die sich von der vertikalen Ebene der Verstärkungsleiste 9 in einem Winkel von etwa 90°, insbesondere in einem Winkel von 90° weg erstrecken. Dies ist der erste Zustand der Befestigungsabschnitte 12,13.

In der Ansicht der **Fig. 1c** erkennt man die Ausnehmungen 11, in welchen die Seitenwände 3 oder 4 und die umgebogenen Abschnitte 7 der Seitenwände 3 oder 4 aufgenommen sind. Die sich von der vertikalen Verstärkungsleiste 9 weg erstreckenden Befestigungsabschnitte 12,13 sind in einem ersten Zustand. Dieser erste Zustand ermöglicht ein formschlüssiges Einsetzen der Verstärkungsleiste 9 quer über mehrere nebeneinander angeordnete Strahlplattenmodule 2.

Auch die Verstärkungsleiste 9 ist vorliegend aus Stahl gebildet.

In **Fig. 1a*****,** **Fig. 1b*****,** **Fig. 1c***** und** **Fig. 1d*** ist insbesondere die Verstärkungsleiste 9 abgebildet. Die Befestigungsabschnitte 12,13 befinden sich dabei in einem zweiten Zustand.

In der Draufsicht der **Fig. 1b******* erkennt man die Befestigungsabschnitte 12,13, die sich innerhalb der vertikalen Ebene der Verstärkungsleiste 9 erstrecken. Dies ist der zweite Zustand der Befestigungsabschnitte 12,13.

In der Ansicht der **Fig. 1c******* erkennt man die Ausnehmungen 11, in welchen die Seitenwände 3 oder 4 und die umgebogenen Abschnitte 7 der Seitenwände 3 oder 4 aufgenommen sind. Die sich innerhalb der vertikalen Verstärkungsleiste 9 erstreckenden Befestigungsabschnitte 12,13 sind in einem zweiten Zustand. Dieser zweite Zustand ermöglicht einen zusätzlichen Formschluss bzw. ein Verriegeln der mehreren Strahplattenmodule 2 mit der formschlüssig eingesetzten Verstärkungsleiste 9, die sich quer über die mehreren nebeneinander angeordneten Strahlplattenmodule 2 erstreckt und diese einerseits zusammenhält und andererseits versteift.

In **Fig. 2a****,** **Fig. 2b und Fig. 2c** ist eine zweite Ausführung einer nach dem erfindungsgemäßen System zusammengesetzten Deckenstrahlplatte 1 gezeigt.

In **Fig. 2a****,** **Fig. 2b und Fig. 2c** ist insbesondere eine Verstärkungsleiste 9' abgebildet. Sie stellt eine **zweite Ausführung** einer erfindungsgemässen Verstärkungsleiste dar. Sie wird auch als **"Durchsteck-Leiste" oder "Durchsteck-Achse"** bezeichnet. Auch sie erfüllt vorliegend eine Doppelfunktion. Einerseits dient sie der mechanischen Stabilisierung der Deckenstrahlplatte 1 in Breitenrichtung B. Andererseits verbindet sie die jeweiligen einander zugewandten Seitenwände 4,5 der Strahlplattenmodule 2 miteinander. Zur Verbindung der kurzen Seitenwände 5 stellt auch sie Schlitze 10 bereit, welche die freien Enden der kurzen Seitenwände 5 miteinander verklemmen. Zur Verbindung der langen Seitenwände 4 enthalten die Seitenwände 4 ein Durchsteckloch 4/4, durch welches die Verstärkungsleiste 9' hindurch ragt und in welchem die Verstärkungsleiste 9' aufgenommen ist. Zur weiteren Befestigung der Verstärkungsleiste 9' an den langen Seitenwänden 3,4 sowie zur Verklemmung der innenliegenden Seitenwände 4 miteinander weist die Verstärkungsleiste 9' abgeschrägte Befestigungsabschnitte 12',13' auf, welche mit den umgebogenen Abschnitten 7,8, insbesondere mit den umgebogenen Abschnitten 8, der Strahlplattenmodule 2 zur Herstellung einer lösbaren Verbindung wechselwirken. Die abgeschrägten Befestigungsabschnitte 12' sind an geschlitzten Bereichen der Verstärkungsleiste 9' vorgesehen. Die Schlitze in diesen Bereichen weisen an ihrem zur Kante der Verstärkungsleiste 9' offenen Ende jeweils eine Abschrägung 12' auf, die mit einem umgebogenen Abschnitt 8 der innenliegenden langen Wände 4 der Strahlplattenmodule 2 verklemmt werden können. Aufgrund der Geometrie werden dabei die umgebogenen Abschnitte 8 stärker elastisch verformt als die geschlitzten Bereiche der Verstärkungsleiste 9'. Auch die abgeschrägten Befestigungsabschnitte 13' sind an geschlitzten Bereichen der Verstärkungsleiste 9' vorgesehen. Auch die Schlitze in diesen Bereichen weisen an ihrem zur Kante der Verstärkungsleiste 9' offenen Ende jeweils eine Abschrägung 13' auf, die mit einem umgebogenen Abschnitt 8 der aussenliegenden langen Wände 3 Strahlplattenmodule 2 verklemmt werden können. Aufgrund der Geometrie werden dabei auch hier die umgebogenen Abschnitte 8 stärker elastisch verformt als die geschlitzten Bereiche der Verstärkungsleiste 9'.

Auch die Verstärkungsleiste 9' ist vorliegend aus Stahl gebildet.

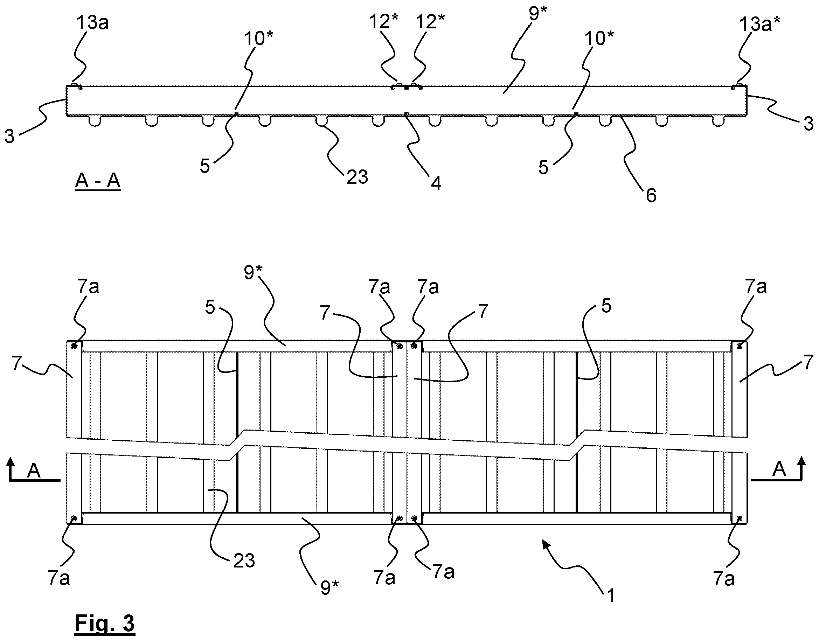

In **Fig. 3** ist eine dritte Ausführung einer nach dem erfindungsgemäßen System zusammengesetzten Deckenstrahlplatte 1 gezeigt.

Die Deckenstrahlplatte 1 ist im vorliegenden Beispiel ebenfalls aus vier Strahlplattenmodulen 2 zusammengesetzt. Die Strahlplattenmodule 2 weisen je drei Rohraufnahmen 23 auf. Es handelt sich mithin um 3er-Module. Die Rohraufnahmen 23 sind auch hier als in Längsrichtung A verlaufende Nuten mit halbkreisförmigem Querschnitt ausgebildet. Die Rohraufnahmen 23 verlaufen auch hier parallel zueinander. Dabei sind auch hier alle Strahlplattenmodule 2 so ausgebildet, dass die Abstände zwischen Rohraufnahmen 23 jedes Strahlplattenmoduls 2 äquidistant sind.

Jedes Strahlplattenmodul 2 weist dabei im vorliegenden Beispiel eine lange Seitenwand 3,4 und eine kurze Seitenwand 5 auf. Die langen Seitenwände 3 bilden dabei wieder die seitliche Außenwand der Deckenstrahlplatte 1, und die langen Seitenwände 4 sind innenliegend angeordnet. Die innenliegenden Seitenwände 4 dienen dabei auch hier der zusätzlichen mechanischen Stabilisierung der Deckenstrahlplatte 1.

Die kurzen Seitenwände 5 dienen auch hier ausschließlich der Verbindung zweier benachbarter 3er-Module 2 und sind alle innenliegend angeordnet. Die Angabe "lang" und "kurz" bezieht sich in diesem Zusammenhang wieder auf die Länge derjenigen Teile der Seitenwände 3,4,5, welche sich im rechten Winkel zu der Strahlfläche 6 der Deckenstrahlplatte 1 erstrecken. In Figur 2 ist diese Erstreckungsrichtung als Richtung C abgebildet.

Die Strahlplattenmodule 2 sind auch hier vorliegend aus Stahlblechrohlingen mittels Pressens einstückig hergestellt. Die Seitenwände 3,4,5 sind dabei gegenüber den jeweils angrenzenden Abschnitten der Strahlflächen 6 um 90°umgebogen.

Als weiteres Verstärkungselement weisen auch hier die langen Seitenwände 3,4 endseitig jeweils zwei weitere Abschnitte 7,8 auf, welche jeweils um weitere 90° umgebogen sind. Hierdurch sind die Strahlplattenmodule 2 und die Deckenstrahlplatte 1 in vorteilhafter Wiese versteift ausgebildet.

In **Fig. 3** ist insbesondere eine Verstärkungsleiste 9* abgebildet. Sie ist im stirnseitigen Endbereich der Deckenstrahlplatte 1 angeordnet. Sie stellt eine **dritte Ausführung** einer erfindungsgemässen Verstärkungsleiste dar. Sie wird auch als "**Stirn-Leiste" oder "Stirn-Achse"** bezeichnet. Auch sie erfüllt vorliegend eine Doppelfunktion. Einerseits dient sie der mechanischen Stabilisierung der Deckenstrahlplatte 1 in Breitenrichtung B. Andererseits verbindet sie die jeweiligen einander zugewandten Seitenwände 4,5 der Strahlplattenmodule 2 miteinander. Zur Verbindung der kurzen Seitenwände 5 stellt auch sie Schlitze 10* bereit, welche die freien Enden der kurzen Seitenwände 5 miteinander verklemmen. Zur weiteren Befestigung der Verstärkungsleiste 9* an den langen Seitenwänden 3,4 sowie zur Verklemmung der innenliegenden Seitenwände 4 miteinander weist die Verstärkungsleiste 9* Befestigungsabschnitte 12*,13* auf, welche mit den umgebogenen Abschnitten 7,8, insbesondere mit den umgebogenen Abschnitten 8, der Strahlplattenmodule 2 zur Herstellung einer lösbaren Verbindung wechselwirken. Die vorzugsweise abgeschrägten Befestigungsabschnitte 12* sind an geschlitzten Bereichen der Verstärkungsleiste 9* vorgesehen. Die Schlitze in diesen Bereichen weisen auch hier an ihrem zur Kante der Verstärkungsleiste 9* offenen Ende jeweils eine Abschrägung 12* auf, die mit einem umgebogenen Abschnitt 8 der innenliegenden langen Wände 4 der Strahlplattenmodule 2 verklemmt werden können. Aufgrund der Geometrie werden dabei auch hier die umgebogenen Abschnitte 8 stärker elastisch verformt als die geschlitzten Bereiche der Verstärkungsleiste 9*. Auch die vorzugsweise abgeschrägten Befestigungsabschnitte 13* sind an geschlitzten Bereichen der Verstärkungsleiste 9* vorgesehen. Auch die Schlitze in diesen Bereichen weisen an ihrem zur Kante der Verstärkungsleiste 9* offenen Ende jeweils eine Abschrägung 13* auf, die mit einem umgebogenen Abschnitt 8 der aussenliegenden langen Wände 3 Strahlplattenmodule 2 verklemmt werden können. Aufgrund der Geometrie werden dabei auch hier die umgebogenen Abschnitte 8 stärker elastisch verformt als die geschlitzten Bereiche der Verstärkungsleiste 9*.

Die Verstärkungsleiste 9* besitzt ausserdem mindestens eine Nase 12*a und mindestens eine Nase 13*a, die vorzugsweise als umgebogener Abschnitt der Verstärkungsleiste 9* ausgebildet sind.

Die umgebogenen Abschnitte 7 der langen Wände 3, 4 der Strahlplattenmodule 2 haben jeweils mindestens ein Loch 7a, durch welches eine Nase 13*a bzw. eine Nase 12*a hindurch ragt. Diese Nasen 12*a und 13*a dienen zusammen mit den Lächern 7a zur weiteren Befestigung der Verstärkungsleiste 9* an den langen Seitenwänden 3,4 sowie zur Verklemmung der innenliegenden Seitenwände 4 miteinander.

Auch die Verstärkungsleiste 9* ist vorliegend aus Stahl gebildet.

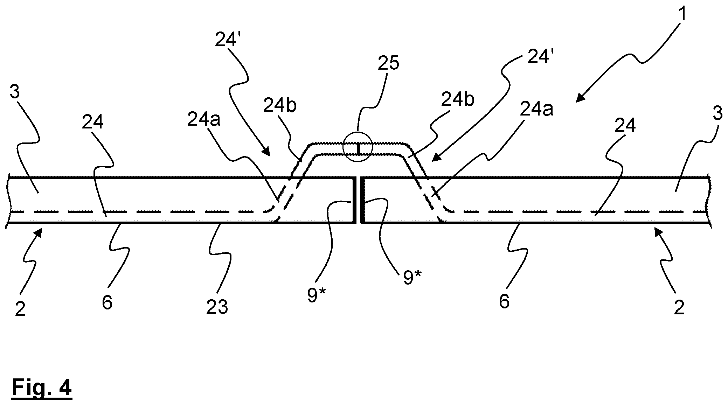

In **Fig. 4** ist eine **vierte Ausführung** einer nach dem erfindungsgemäßen System zusammengesetzten Deckenstrahlplatte 1 in einer Seitenansicht gezeigt, so dass man die langen Seitenwände 3 der beiden Strahlplattenmodule 2 erkennt. Die in den Rohraufnahmen 23 der beiden Strahlplattenmodule 2 verlaufenden und von den langen Seitenwänden 3 verdeckten Rohre 24 sind gestrichelt gezeichnet. In dem stirnseitigen Endbereich der beiden Strahlplattenmodule 2 ist jeweils eine Verstärkungsleiste 9* angeordnet. Ausserdem sind im stirnseitigen Endbereich des jeweiligen Strahlplattenmoduls 2 die dort verlaufenden Rohrabschnitte 24' nach oben hochgebogen. Diese hochgebogenen Rohrabschnitte 24' haben entlang des jeweiligen Rohres 24 zum Rohrende hin einen ersten Rohrabschnitt 24a mit einer ersten Krümmungsrichtung, in welchem das Rohr 24 von der Strahlfläche 6 weg gekrümmt ist, und einen zweiten Rohrabschnitt 24b mit einer zur ersten Krümmungsrichtung entgegengesetzten Krümmungsrichtung. Die beiden hochgebogenen Rohrabschnitte 24' haben daher jeweils einen Krümmungs-Wendepunkt und sind daher in etwa S-förmig. Die Rohrenden benachbarter Strahlplattenmodule 2 sind mittels eines Rohrverbindungselements 25, welches oberhalb der Deckenstrahlplatte 1 angeordnet ist, miteinander fluiddicht verbunden.

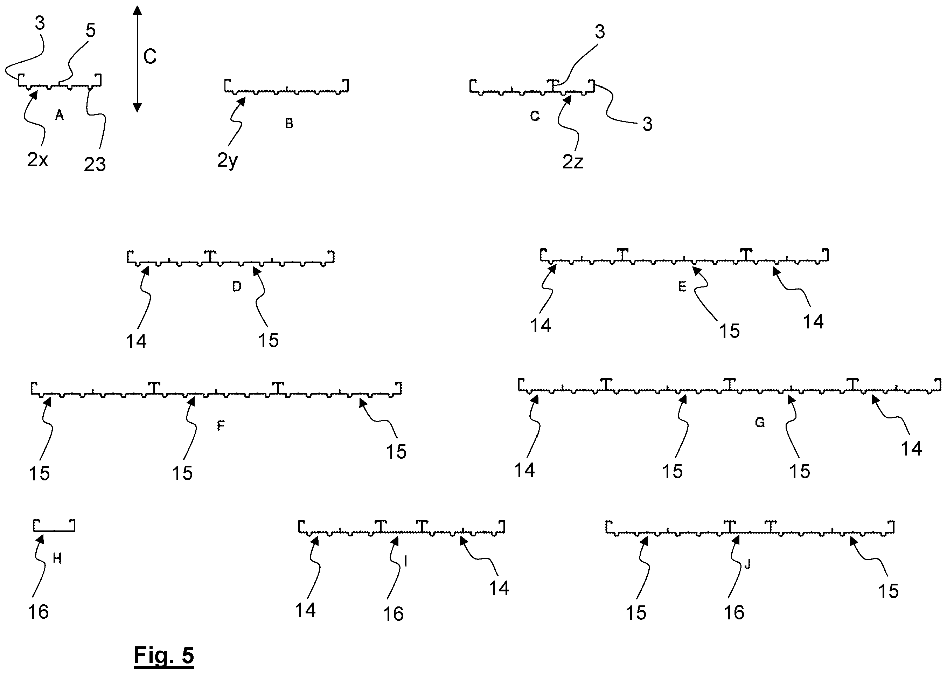

Fig. 5 zeigt eine Auswahl an mittels des erfindungsgemäßen Systems und des erfindungsgemäßen Verfahrens aufbaubaren Deckenstrahlplatten A bis G.

Das erfindungsgemäße System umfasst vorliegend Strahlplattenmodule 2x mit zwei Rohraufnahmen 23 sowie einer kurzen Seitenwand 5 und einer langen Seitenwand 3 (2er-Modul). Ferner umfasst das System vorliegend Strahlplattenmodule 2y mit zwei Rohraufnahmen 23 sowie zwei langen Seitenwänden 3 (2'er-Modul). Ferner umfasst das System vorliegend Strahlplattenmodule 2z mit drei Rohraufnahmen 23 sowie einer kurzen Seitenwand 5 und einer langen Seitenwand 3 (3er-Modul). Vorzugsweise sind die drei Gruppen von Strahlplattenmodulen 2x,y,z die einzigen im System verwendeten Strahlplattenmodule. Aus vorgenannten Strahlplattenmodulen 2x,y,z lassen sich beispielhaft die nachfolgenden Deckenstrahlplatten zusammensetzen.

Deckenstrahlplatte A ist vorliegend zusammengesetzt aus zwei 2er-Modulen und weist damit insgesamt vier Rohraufnahmen 23 auf.

Deckenstrahlplatte B ist vorliegend zusammengesetzt aus zwei 3er-Modulen und weist damit insgesamt sechs Rohraufnahmen 23 auf.

Deckenstrahlplatte C ist vorliegend zusammengesetzt aus zwei 2er-Modulen und einem 2'er-Modul und weist damit insgesamt sechs Rohraufnahmen 23 auf.

Deckenstrahlplatte D ist vorliegend zusammengesetzt aus zwei 2er-Modulen und zwei 3er-Modulen und weist damit insgesamt 10 Rohraufnahmen 23 auf.

Deckenstrahlplatte E ist vorliegend zusammengesetzt aus vier 2er-Modulen, wobei jeweils zwei 2er-Module zu einem Kombinationsmodul 14 verbunden sind, und zwei 3er-Modulen, die zu einem Kombinationsmodul 15 verbunden sind. Die beiden Kombinationsmodule 14 sind unter Zwischenordnung des Kombinationsmoduls 15 miteinander verbunden. Die Deckenstrahlplatte E weist damit insgesamt 14 Rohraufnahmen 23 auf.

Deckenstrahlplatte F ist vorliegend zusammengesetzt aus drei Kombinationsmodulen 15 und weist damit insgesamt 18 Rohraufnahmen 23 auf.

Deckenstrahlplatte G ist vorliegend zusammengesetzt aus zwei Kombinationsmodulen 14 und zwei Kombinationsmodulen 15. Die beiden Kombinationsmodule 14 sind unter Zwischenordnung der beiden Kombinationsmodule 15 miteinander verbunden. Die Deckenstrahlplatte G weist damit insgesamt 20 Rohraufnahmen 23 auf.

Anhand dieser Beispiele ist ersichtlich, dass sich die Deckenstrahlplatte 1 in Richtung B durch entsprechende Kombination der erfindungsgemäßen 2er- und 3er-Module beliebig verbreitern lässt. Es kann damit eine Deckenstrahlplatte 1 mit durchgängiger Strahlfläche 6 bereitgestellt werden, die an jede beliebe Fläche anpassbar ist.

### Bezugszeichen

- 1: Deckenstrahlplatte
- 2: Strahlplattenmodul
- 2x: 2er-Modul
- 2y: 2er-Modul
- 2z: 3er-Modul
- 3: lange Seitenwand
- 4: lange Seitenwand
- 4/4: langes Seitenwand-Paar aus langen Seitenwänden
- 4a/4a: Durchsteckloch
- 5: kurze Seitenwand
- 5/5: kurzes Seitenwand-Paar aus kurzen Seitenwänden
- 6: Strahlfläche
- 7: umgebogener Abschnitt
- 7a: Loch
- 8: umgebogener Abschnitt
- 9: Verstärkungsleiste ("Überbau-Achse")
- 9': Verstärkungsleiste ("Durchsteck-Achse")
- 9*: Verstärkungsleiste ("Stirn-Achse")
- 10: Schlitz
- 11: Ausnehmung
- 12: Befestigungsabschnitt (umgebogener oder nicht / nicht mehr umgebogener Endabschnitt)
- 13: Befestigungsabschnitt (umgebogener oder nicht / nicht mehr umgebogener Endabschnitt)
- 12': Befestigungsabschnitt (abgeschrägter Endabschnitt / Klemmabschnitt)
- 13': Befestigungsabschnitt (abgeschrägter Endabschnitt / Klemmabschnitt)
- 12*: Befestigungsabschnitt (abgeschrägter Endabschnitt / Klemmabschnitt)
- 13*: Befestigungsabschnitt (abgeschrägter Endabschnitt / Klemmabschnitt)
- 12*a: Nase (umgebogener Endabschnitt)
- 13*a: Nase (umgebogener Endabschnitt)
- 14: Kombinationsmodul
- 15: Kombinationsmodul
- 23: Rohraufnahme
- 24: Rohr
- 24': hochgebogener Rohrabschnitt
- 24a: Rohrabschnitt mit erster Krümmungsrichtung
- 24b: Rohrabschnitt mit zweiter Krümmungsrichtung
- 25: Rohrverbindungselement
- A: Längsrichtung
- B: Breitenrichtung
- C: Querschnittslängenrichtung (orthogonal zu A und B)

### Bezugszeichen

- 1: Deckenstrahlplatte
- 2: Strahlplattenmodul
- 2x: 2er-Modul
- 2y: 2er-Modul
- 2z: 3er-Modul
- 3: lange Seitenwand
- 4: lange Seitenwand
- 4/4: langes Seitenwand-Paar aus langen Seitenwänden
- 4a/4a: Durchsteckloch
- 5: kurze Seitenwand
- 5/5: kurzes Seitenwand-Paar aus kurzen Seitenwänden
- 6: Strahlfläche
- 7: umgebogener Abschnitt
- 7a: Loch
- 8: umgebogener Abschnitt
- 9: Verstärkungsleiste ("Überbau-Achse")
- 9': Verstärkungsleiste ("Durchsteck-Achse")
- 9*: Verstärkungsleiste ("Stirn-Achse")
- 10: Schlitz
- 11: Ausnehmung
- 12: Befestigungsabschnitt (umgebogener oder nicht / nicht mehr umgebogener Endabschnitt)
- 13: Befestigungsabschnitt (umgebogener oder nicht / nicht mehr umgebogener Endabschnitt)
- 12': Befestigungsabschnitt (abgeschrägter Endabschnitt / Klemmabschnitt)
- 13': Befestigungsabschnitt (abgeschrägter Endabschnitt / Klemmabschnitt)
- 12*: Befestigungsabschnitt (abgeschrägter Endabschnitt / Klemmabschnitt)
- 13*: Befestigungsabschnitt (abgeschrägter Endabschnitt / Klemmabschnitt)
- 12*a: Nase (umgebogener Endabschnitt)
- 13*a: Nase (umgebogener Endabschnitt)
- 14: Kombinationsmodul
- 15: Kombinationsmodul
- 23: Rohraufnahme
- 24: Rohr
- 24': hochgebogener Rohrabschnitt
- 24a: Rohrabschnitt mit erster Krümmungsrichtung
- 24b: Rohrabschnitt mit zweiter Krümmungsrichtung
- 25: Rohrverbindungselement
- A: Längsrichtung
- B: Breitenrichtung
- C: Querschnittslängenrichtung (orthogonal zu A und B)

## Patentansprüche

1. Modulares System zum Aufbau einer hinsichtlich ihrer Flächenerstreckung variablen Strahlplatte (1), insbesondere Heizstrahlplatte oder Kühlstrahlplatte, aufweisend eine Mehrzahl von Strahlplattenmodulen (2), aus welchen die Strahlplatte (1) zusammensetzbar ist, wobei jedes Strahlplattenmodul (2) eine Strahlfläche (6) und zwei auf gegenüberliegenden Seiten der Strahlfläche (6) angeordnete und in Längsrichtung des Strahlplattenmoduls (2) verlaufende Seitenwände (3,4,5) aufweist, wobei die Strahlplattenmodule (2) über ihre jeweiligen Seitenwände (3,4,5) miteinander verbindbar sind, **gekennzeichnet durch** wenigstens eine biegesteife Verstärkungsleiste (9',9*), welche an den Innenseiten einander gegenüberliegend verlaufender Seitenwände (3,4,5) befestigbar ist, wobei die Verstärkungsleiste (9',9*) mindestens eine Ausnehmung (10,10*) aufweist, in welche im befestigten Zustand jeweils ein kurzes Seitenwand-Paar (5/5) zweier benachbarter Strahlplattenmodule (2,2) hineinragt, wobei zwischen der Ausnehmung (10;10*) und dem kurzen Seitenwand-Paar (5/5) ein Formschluss gebildet ist; und wobei ein langes Seitenwand-Paar (4/4) zweier benachbarter Strahlplattenmodule (2,2) ein Durchsteckloch (4a/4a) aufweist, durch welches die Verstärkungsleiste (9') im befestigten Zustand hindurch ragt.

2. System nach Anspruch 1, **dadurch gekennzeichnet, dass** sich die Seitenwände (3,4,5) in einem Winkel, insbesondere in einem rechten Winkel, gegenüber der Strahlfläche (6) und zumindest abschnittsweise parallel zueinander erstrecken, wobei bei wenigstens einem Teil der Strahlplattenmodule (2) die beiden Seitenwände (3,4,5) im Querschnitt eine voneinander verschiedene Länge aufweisen.

3. System nach Anspruch 1 oder 2, wobei die Strahlplattenmodule (2) mit zwei unterschiedlichen Breiten ausgebildet sind, wobei die schmaleren Strahlplattenmodule (2x, 2y) jeweils zwei Rohraufnahmen (23) für die Aufnahme jeweils eines Rohrs zur Führung eines Heizmediums aufweist, welche in Längsrichtung parallel zueinander verlaufen und wobei die breiteren Strahlplattenmodule (2z) jeweils drei Rohraufnahmen (23) aufweisen und wobei insbesondere unmittelbar benachbarte Rohraufnahmen (23) innerhalb eines jeden Strahlplattenmoduls (2) den gleichen Abstand zueinander aufweisen.

4. System nach einem der vorherigen Ansprüche, wobei die Strahlplattenmodule (2) jeweils aus einem plattenförmigen Metallrohling gebildet sind, wobei die Seitenwände (3,4,5) dadurch gebildet sind, dass sie relativ zur Strahlfläche (6) umgebogen sind, wobei vorzugsweise die Rohraufnahmen (23) durch in den Metallrohling eingepresste, vorzugsweise im Querschnitt halbkreisförmige, Nuten gebildet sind.

5. System nach einem der vorherigen Ansprüche, wobei die biegesteife Verstärkungsleiste (9',9*) sich über die gesamte Breite der Strahlplatte (1) über die Mehrzahl der Strahlplattenmodule (2) hinweg erstreckend an umgebogenen Abschnitten (7,8) der Seitenwände (3,4,5) befestigbar ist.

6. System nach einem der vorherigen Ansprüche, wobei die Verstärkungsleiste (9') mindestens einen Befestigungsabschnitt (12') aufweist, mit welchem die Verstärkungsleiste (9') an dem langen Seitenwand-Paar (4/4) befestigbar ist, und mindestens einen Befestigungsabschnitt (13') aufweist, mit welchem die Verstärkungsleiste (9') an einer langen Seitenwand (3) befestigbar ist.

7. System nach einem der vorherigen Ansprüche, wobei die Verstärkungsleiste (9*) mindestens eine Ausnehmung (10*) aufweist, in welche im befestigten Zustand jeweils ein kurzes Seitenwand-Paar (5/5) zweier benachbarter Strahlplattenmodule (2,2) hineinragt, wobei zwischen der Ausnehmung (10) und dem kurzen Seitenwand-Paar (5/5) ein Formschluss gebildet ist, wobei vorzugsweise ein umgebogener Abschnitt (7) der Seitenwände (3,4,5) ein Loch (7a) aufweist und die Verstärkungsleiste (9*) mindestens eine Nase (12*a) aufweist, welche im befestigten Zustand durch ein Loch (7a) an einem umgebogenen Abschnitt (7) eines langen Seitenwand-Paars (4/4) hindurch ragt, und mindestens eine Nase (13*a) aufweist, welche im befestigten Zustand durch ein Loch (7a) an einem umgebogenen Abschnitt (7) einer langen Seitenwand (3) hindurch ragt.

8. System nach einem der vorherigen Ansprüche, **gekennzeichnet durch** Kuppelelemente, insbesondere Kuppelbleche, wobei ein Kuppelelement zur Verbindung zweier Strahlplattenmodule (2) in Längsrichtung an den jeweiligen Stirnseiten der Strahlplattenmodule (2) befestigbar ist oder **gekennzeichnet durch** hochgebogene Rohrabschnitte (24') der Rohre (24) im Bereich der jeweiligen Stirnseiten der Strahlplattenmodule (2), wobei die Rohrenden benachbarter Strahlplattenmodule (2) mittels eines Rohrverbindungselements (25) miteinander fluiddicht verbunden sind .

9. Verfahren zum Aufbau einer hinsichtlich ihrer Flächenerstreckung variablen Strahlplatte (1) aus einem modularen System nach einem der Ansprüche 1 bis 8, bei dem wenigstens zwei Strahlplattenmodule (2) an ihren einander zugewandten in Längsrichtung verlaufenden Seitenwänden (3,4,5) miteinander verbunden werden, wobei vorzugsweise die Strahlplattenmodule (2) Seitenwände (3,4,5) mit im Querschnitt unterschiedlicher Länge aufweisen, wobei nur die Seitenwände (4 mit 4 bzw. 5 mit 5) mit gleicher Länge miteinander verbunden werden.

10. Verfahren nach Anspruch 9, wobei benachbarte Strahlplattenmodule (2) hochgebogene Rohrabschnitte (24a) der Rohre (24) im Bereich der jeweiligen Stirnseiten der Strahlplattenmodule (2) aufweisen, wobei die Rohrenden benachbarter Strahlplattenmodule (2) mittels eines Rohrverbindungselements (25) miteinander fluiddicht verbunden werden.

## Claims

1. A modular system for constructing a radiant panel (1), in particular a heating radiant panel or cooling radiant panel, which is variable in terms of its surface extension, having a plurality of radiant panel modules (2) from which the radiant panel (1) can be assembled, each radiant panel module (2) having a radiant surface (6) and two side walls (3, 4, 5) arranged on opposite sides of the radiant surface (6) and extending in the longitudinal direction of the radiant panel module (2), wherein the radiant panel modules (2) can be connected to one another via their respective side walls (3, 4, 5), **characterized by** at least one flexurally rigid reinforcing strip (9', 9*) which can be attached to the inner sides of mutually oppositely extending side walls (3, 4,5), wherein the reinforcing strip (9', 9*) has at least one recess (10, 10*) into which, in the fastened state, a respective short side wall pair (5/5) of two neighboring radiant panel modules (2, 2) projects, wherein between the recess (10;10*) and the short side wall pair (5/5) a form-fit is formed; and wherein a long side wall pair (4/4) of two neighboring radiant panel modules (2,2) has a through-hole (4a/4a) through which the reinforcing strip (9') projects in the fastened state.

2. System according to claim 1, **characterized in that** the side walls (3, 4, 5) extend at an angle, in particular at a right angle, relative to the radiant surface (6) and at least sectionally parallel to one another, the two side walls (3, 4, 5) of at least some of the radiant panel modules (2) having a different length from one another in cross section.

3. System according to claim 1 or 2, wherein the radiant panel modules (2) are designed with two different widths, wherein the narrower radiant panel modules (2x, 2y) each have two pipe receptacles (23) for receiving a respective pipe for guiding a heating medium, which run parallel to one another in longitudinal direction and wherein the wider radiant panel modules (2z) each have three pipe receptacles (23) and wherein, in particular directly neighbouring pipe receptacles (23) within each radiant panel module (2) are at the same distance from one another.

4. System according to one of the preceding claims, wherein the radiant panel modules (2) are respectively made from a plate-shaped metal blank, wherein the side walls (3, 4, 5) are formed by being bent over relative to the radiant surface (6), wherein preferably the pipe receptacles (23) are made from grooves pressed into the metal blank, preferably semicircular in cross section.

5. System according to one of the previous claims, wherein the flexurally rigid reinforcing strip (9', 9*) can be fastened to bent-over sections (7, 8) of the side walls (3, 4, 5), extending over the entire width of the radiant panel (1) across the plurality of radiant panel modules (2).

6. System according to one of the previous claims, wherein the reinforcing strip (9') has at least one fastening section (12'), with which the reinforcing strip (9') can be fastened to the long side wall pair (4/4), and has at least one fastening section (13'), with which the reinforcing strip (9') can be fastened to a long side wall (3).

7. System according to one of the preceding claims, wherein the reinforcing strip (9*) has at least one recess (10*) into which, in the fastened state, a respective short side wall pair (5/5) of two neighboring radiant panel modules (2, 2) projects, wherein a form-fit is formed between the recess (10) and the short side wall pair (5/5), wherein preferably a bent-over section (7) of the side walls (3,4, 5) has a hole (7a) and the reinforcing strip (9*) has at least one lug (12*a) which, in the fastened state, projects through a hole (7a) on a bent-over section (7) of a long side wall pair (4/4), and has at least one lug (13*a) which, in the fastened state, projects through a hole (7a) on a bent-over section (7) of a long side wall (3).

8. System according to one of the preceding claims, **characterized by** coupling elements, in particular coupling sheet metals, wherein a coupling element for connecting two radiant panel modules (2) can be fastened in longitudinal direction to the respective front faces of the radiant panel modules (2) or **characterized by** upwardly bent pipe sections (24') of the pipes (24) in the region of the respective front faces of the radiant panel modules (2), wherein the pipe ends of neighbouring radiant panel modules (2) are connected to one another in fluid-tight manner by means of a pipe connecting element (25).

9. A method for constructing a radiant panel (1), which is variable with respect to its surface extension, from a modular system according to one of claims 1 to 8, in which at least two radiant panel modules (2) are connected to one another at their side walls (3, 4, 5) facing one another in the longitudinal direction, the radiant panel modules (2) preferably having side walls (3, 4, 5) of different length in cross section, only the side walls (4 with 4 resp. 5 with 5) of the same length being connected to one another.

10. Method according to claim 9, wherein neighboring radiant panel modules (2) have upwardly bent pipe sections (24a) of the pipes (24) in the region of the respective front faces of the radiant panel modules (2), wherein the pipe ends of neighboring radiant panel modules (2) are connected to one another in a fluid-tight manner by means of a pipe connecting element (25).

## Revendications

1. Système modulaire pour la construction d'une plaque radiante (1) variable quant à son étendue de surface, en particulier une plaque radiante de chauffage ou une plaque radiante de refroidissement, présentant une pluralité de modules de plaque radiante (2), à partir desquels la plaque radiante (1) peut être assemblée, chaque module de plaque radiante (2) présentant une surface de rayonnement (6) et deux parois latérales (3, 4, 5) disposées sur des côtés opposés de la surface de rayonnement (6) et s'étendant dans la direction d'allongement du module de plaque radiante (2), les modules de plaque radiante (2) pouvant être reliés entre eux par l'intermédiaire de leurs parois latérales respectives (3, 4, 5), **caractérisé par** au moins une barre de renforcement (9', 9*) résistante à la flexion, qui est fixée sur les côtés intérieurs de parois latérales (3, 4, 5), la barre de renforcement (9', 9*) présentant au moins un évidement (10, 10*) dans lequel pénètre, à l'état fixé, respectivement une courte paire de parois latérales (5/5) de deux modules de plaque radiante (2, 2) voisins, qu'entre l'évidement (10 ; 10*) et la paire de parois latérales (5/5) courte est formée par engagement positif ; et une paire de parois latérales (4/4) longue de deux modules de plaque radiante (2, 2) voisins présentant un trou de passage (4a/4a) à travers lequel la barre de renforcement (9') fait saillie à l'état fixé.

2. Système selon la revendication 1, **caractérisé en ce que** les parois latérales (3, 4, 5) s'étendent sous un angle, en particulier sous un angle droit, par rapport à la surface radiante (6) et au moins par sections parallèlement l'une à l'autre, les deux parois latérales (3, 4, 5) présentant, pour au moins une partie des modules de plaque radiante (2), une longueur différente l'une de l'autre en section transversale.

3. Système selon la revendication 1 ou 2, dans lequel les modules de plaque radiante (2) sont réalisés avec deux largeurs différentes, dans lequel les modules de plaque radiante plus étroits (2x, 2y) présentent chacun deux logements de tubes (23) pour recevoir chacun un tube pour le guidage d'un fluide de chauffage, lesquels s'étendent parallèlement l'un à l'autre dans la direction longitudinale, et dans lequel les modules de plaque radiante plus larges (2z) présentent chacun trois logements de tubes (23), et dans lequel en particulier des logements de tubes (23) directement voisins à l'intérieur de chaque module de plaque radiante (2) présentent la même distance les uns par rapport aux autres.

4. Système selon l'une des revendications précédentes, dans lequel les modules de plaque radiante (2) sont formés chacun d'une ébauche métallique en forme de plaque, les parois latérales (3, 4, 5) étant formées par le fait qu'elles sont repliées par rapport à la surface radiante (6), les logements de tubes (23) étant de préférence formés par des rainures, de préférence semi-circulaires en section transversale, pressées dans l'ébauche métallique.

5. Système selon l'une des revendications précédentes, dans lequel la barre de renforcement résistante à la flexion (9', 9*) peut être fixée sur des sections repliées (7, 8) des parois latérales (3, 4, 5) en s'étendant sur toute la largeur de la plaque radiante (1), par-dessus la pluralité de modules de plaque radiante (2).

6. Système selon l'une quelconque des revendications précédentes, dans lequel la barre de renforcement (9') comprend au moins une section de fixation (12') par laquelle la barre de renforcement (9') peut être fixée à la paire de parois latérales longues (4/4), et au moins une section de fixation (13') par laquelle la barre de renforcement (9') peut être fixée à une paroi latérale longue (3).

7. Système selon l'une des revendications précédentes, dans lequel la barre de renforcement (9*) présente au moins un évidement (10*) dans lequel pénètre, à l'état fixé, respectivement une courte section repliée (5/5) de deux modules de plaque radiante (2, 2) voisins, un engagement positif étant formé entre l'évidement (10) et la courte section repliée (5/5) de la paroi latérale, une section repliée (7) des parois latérales (3, 4, 5) présente un trou (7a) et la barre de renforcement (9*) présente au moins un ergot (12*a) qui, à l'état fixé, fait saillie à travers un trou (7a) sur une section repliée (7) d'une paire de parois latérales longues (4/4) et au moins un ergot (13*a) qui, à l'état fixé, fait saillie à travers un trou (7a) sur une section repliée (7) d'une paroi latérale longue (3) .

8. Système selon l'une des revendications précédentes, **caractérisé par** des éléments d'accouplement, en particulier des tôles d'accouplement, un élément d'accouplement pouvant être fixé sur les faces frontales respectives des modules de plaque radiante (2) pour relier deux modules de plaque radiante (2) dans la direction longitudinale, ou **caractérisé par** des sections de tube recourbées vers le haut (24') des tubes (24) dans la zone des faces frontales respectives des modules de plaque radiante (2), les extrémités de tube de modules de plaque radiante (2) voisins étant reliées entre elles de manière étanche aux fluides au moyen d'un élément de liaison de tube (25) .

9. Procédé pour la construction d'une plaque radiante (1) variable quant à son étendue de surface à partir d'un système modulaire selon l'une des revendications 1 à 8, dans lequel au moins deux modules de plaque radiante (2) sont reliés entre eux au niveau de leurs parois latérales (3, 4, 5) tournées l'une vers l'autre et s'étendant dans la direction longitudinale, les modules de plaque radiante (2) présentant de préférence des parois latérales (3, 4, 5) de longueurs différentes en section transversale, seules les parois latérales (4 avec 4 ou 5 avec 5) de même longueur étant reliées entre elles.

10. Procédé selon la revendication 9, dans lequel des modules de plaque radiante (2) voisins présentent des sections de tube (24a) des tubes (24) recourbées vers le haut dans la zone des faces frontales respectives des modules de plaque radiante (2), les extrémités de tube de modules de plaque radiante (2) voisins étant reliées entre elles de manière étanche aux fluides au moyen d'un élément de liaison de tube (25).
